# EUROPEAN PATENT APPLICATION

(11) **EP 1 002 579 A1**
(43) Date of publication of application: **24.05.2000**
(21) Application number: 98122049.4
(22) Date of filing: 20.11.1998
(51) Int. Cl.: B01J 37/02, B01J 27/053, C10G 45/62, C07C 5/27

(54) **Sulfated layered catalyst for use in a paraffin isomerization process**

(71) Applicant: UOP, Des Plaines, Illinois 60017-5017 (US)
(72) Inventor: Gillespie, Ralph D., Gurnee, IL 60031 (US)
(74) Representative: Weber, Dieter, Dr.

(57) **Abstract**

A novel layered catalyst and a process using this catalyst are disclosed to selectively upgrade naphtha to obtain an isoparaffin-rich product for blending into gasoline. The catalyst comprises a combination of a core sulfated support of an oxide or hydroxide of a Group IVB (IUPAC 4) metal, an intermediate metal component consisting essentially of single promoter metal, or a compound thereof, selected from manganese, nickel and iron and a top layer containing a single metal, or compound thereof, selected from the platinum-group metals.

## Description

### Field

This invention relates to an improved layered isomerization catalyst for the conversion of paraffin hydrocarbons, and more specifically for the selective upgrading of naphtha by isomerization.

### Background

The widespread removal of lead antiknock additive from gasoline and the rising fuel-quality demands of high-performance internal-combustion engines have compelled petroleum refiners to install new and modified processes for increased "octane," or knock resistance, in the gasoline pool. Refiners have relied on a variety of options to upgrade the gasoline pool, including higher-severity catalytic reforming, higher FCC (fluid catalytic cracking) gasoline octane, isomerization of light naphtha and the use of oxygenated compounds. Such key options as increased reforming severity and higher FCC gasoline octane result in a higher aromatics content of the gasoline pool, through the production of high-octane aromatics at the expense of low-octane heavy paraffins.

Currently, refiners are faced with the prospect of supplying reformulated gasoline to meet tightened automotive emission standards. Reformulated gasoline differs from the traditional product in having a lower vapor pressure, lower final boiling point, increased content of oxygenates, and lower content of olefins, benzene and aromatics. Benzene content generally is being restricted to 1% or lower, and is limited to 0.8% in U.S. reformulated gasoline. Gasoline aromatics content is likely to be lowered, particularly as distillation end points (usually characterized as the 90% distillation temperature) are lowered, since the high-boiling portion of the gasoline which thereby would be eliminated usually is an aromatics concentrate. Since aromatics have been the principal source of increased gasoline octanes during the recent lead-reduction program, severe restriction of the benzene/aromatics content and high-boiling portion will present refiners with processing problems. These problems have been addressed through such technology as isomerization of light naphtha to increase its octane number, isomerization of butanes as alkylation feedstock, and generation of additional light olefins through fluid catalytic cracking and dehydrogenation as feedstock for alkylation and production of oxygenates. This issue often has been addressed by raising the cut point between light and heavy naphtha, increasing the relative quantity of naphtha to an isomerization unit. The performance and stability of light-naphtha isomerization units thus are increasingly important in refinery economics.

US-A-2,939,896 teaches isomerization of paraffinic hydrocarbons using a catalyst containing platinum, halogen and a sulfate of aluminum, magnesium and/or zirconium deposited on activated alumina. This patent does not disclose additional metal components of the catalyst, however.

US-A-5,036,035 teaches a catalyst, and its use in isomerization, containing sulfate, zirconium oxide or hydroxide and a platinum-group metal; coverage is restricted to a catalyst consisting essentially of these components. There is a teaching that reduction of the Group VIII metal is not favorable. Metal components of the present invention are not disclosed.

US-A-4,918,041 and European patent application EP-A-0 666 109 disclose a sulfated catalyst, and use in isomerization, comprising an oxide or hydroxide of Group III or Group IV; oxide or hydroxide of Groups V, VI or VII; and oxide or hydroxide of Group VIII; '109 also discloses a component from a list of Group VIII metals and metal combinations. Examples show the advantage of combining iron and manganese on the catalyst in specified ratios; there is no teaching of a layered construction according to the present invention.

US-A-5,516,964 teach an isomerization process using a catalyst comprising specified metal combinations on a sulfated support comprising Group III or IV metal oxide or hydroxide, wherein the support is calcined before introduction of the first metal and subsequently calcined at a lower temperature. The invention is exemplified using Pt/Fe/Mn/sulfate/zirconia catalysts.

### SUMMARY

It is an object of the present invention to provide improved technology to upgrade naphtha to gasoline. A specific object is to provide an improved layered catalyst and process for the isomerization of light naphtha to obtain a high octane gasoline component.

This invention is based on the discovery that a superacid catalyst containing narrowly defined single metal layers provides superior performance and stability in the isomerization of light naphtha to increase its isoparaffin content.

A broad embodiment of the present invention is directed to a superacid catalyst comprising a combination of a core sulfated support of an oxide or hydroxide of a Group IVB (IUPAC 4) metal, preferably zirconium oxide or hydroxide, an intermediate layer consisting essentially a single promoter metal as compound thereof and a top layer containing a single platinum-group metal or compound thereof. The promoter metal is selected from metals having an atomic number from 23 to 28, and preferably is manganese, iron or nickel; other metals than the designated promoter are excluded from the catalyst. The platinum-group metal preferably is platinum. The core of the catalyst preferably comprises an inorganic-oxide binder, especially alumina.

An additional embodiment of the invention is a method of preparing the catalyst of the invention by sulfating the core Group IVB metal oxide or hydroxide, incorporating the intermediate layer containing the single promoter metal and thereafter adding a top layer containing the single platinum-group metal.

In another aspect, the invention comprises the isomerization of isomerizable hydrocarbons using the layered catalyst of the invention. The hydrocarbons preferably comprise light naphtha which is isomerized to increase its isoparaffin content and octane number as a gasoline blending stock.

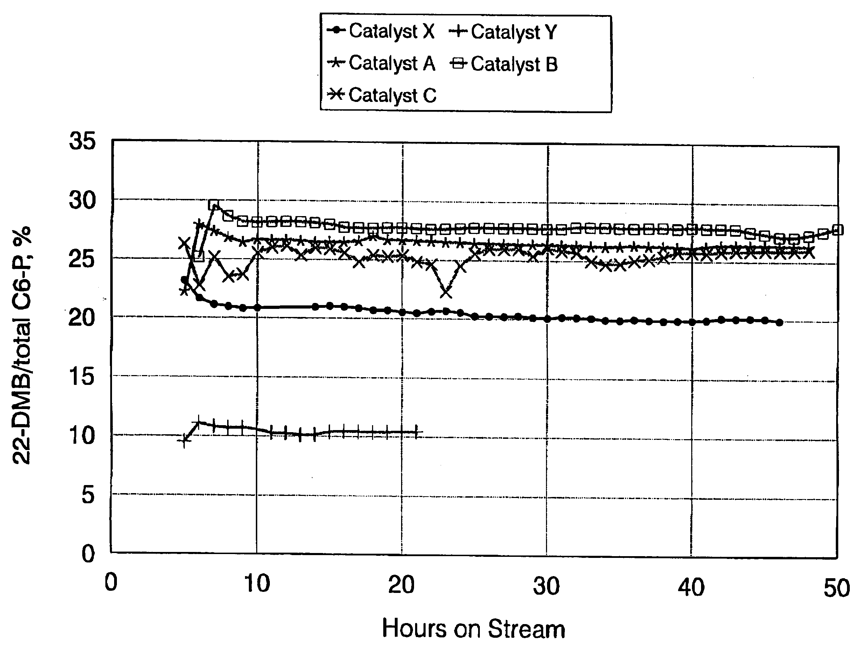

### BRIEF DESCRIPTION OF THE DRAWING

The Figure shows a comparison of the isomerization performance of catalysts of the invention catalyst A, B and C containing manganese alone, iron alone and nickel alone in comparison to two catalyst of the prior art, catalysts X and Y, containing multiple promoters.

### DETAILED DESCRIPTION

The core support material of the catalyst of the present invention comprises an oxide or hydroxide of a Group IVB (IUPAC 4) metal [See Cotton and Wilkinson, Advanced Inorganic Chemistry, John Wiley & Sons (Fifth Edition, 1988)]. Preferably the metal is selected from zirconium and titanium, with zirconium being especially preferred. The preferred zirconium oxide or hydroxide is converted via calcination to crystalline form. Sulfate is composited with the surface of the support material to form, it is believed without so limiting the invention, a mixture of Brönsted and Lewis acid sites. Optionally, the core support material is bound with a refractory inorganic oxide. A single metal promoter is used as an intermediate layer selected from the group having an atomic number of from 23 to 28 inclusive is composited with the core support material by any suitable means, for example as a component of an initial slurry preparation along with the Group IVB metal hydroxide or by impregnation before or after calcination of the support. A platinum-group metal component is added as the top layer to the catalytic composite by any means known in the art to effect the catalyst of the invention, e.g., by impregnation.

Production of the core support of the present catalyst may be based on a hydroxide of a Group IVB (IUPAC 4) metal as raw material. For example, suitable zirconium hydroxide is available from MEI of Flemington, New Jersey. Alternatively, the hydroxide may be prepared by hydrolyzing metal oxy-anion compounds, for example ZrOCl₂, ZrO(NO₃)₂, Zr(OH)NO₃, ZrOSO₄, TiOCl₂ and the like. The hydrolysis can be effected using a hydrolyzing agent such as ammonium hydroxide, sodium hydroxide, potassium hydroxide, sodium sulfate, (NH₄)₂HPO₄ and other such compounds known in the art. The metal oxy-anion component may in turn be prepared from available materials, for example by treating ZrOCO₃ with nitric acid. The hydroxide as purchased or generated by hydrolysis preferably is dried at a temperature of from 100 to 300°C to vaporize volatile compounds.

A sulfated core support is prepared by treatment with a suitable sulfating agent to form a solid acid, optionally a solid superacid having acid strength or proton-donating ability at least as great as anhydrous sulfuric acid. Sulfate ion is incorporated into a catalytic composite, for example, by treatment with sulfuric acid in a concentration usually of from 0.01-10N and preferably from 0.1-5N. Compounds such as hydrogen sulfide, mercaptans or sulfur dioxide, which are capable of forming sulfate ions upon calcining, may be employed as alternative sources. Preferably ammonium sulfate is employed to provide sulfate ion to the catalytic composite. The sulfur content of the finished catalyst generally is in the range of 0.5 to 5 mass-%, and preferably is from 1 to 2.5 mass-%. The sulfated composite is dried, preferably followed by calcination at a temperature of 500 to 700°C.

A modifier metal component, consisting essentially of components of a single first metal selected broadly from the group consisting of elements having atomic numbers from 23 to 28 is an essential ingredient of the catalyst of the present invention. Most preferably the first metal is selected from the group consisting of metals having an atomic number between 25 and 28 with Mn or Ni or Fe being especially preferred and Mn giving best results.

The modifier metal is present in a concentration on the catalyst of from 0.05 to 10 mass-%, and preferably from 0.1 to 5 mass-% on an elemental basis. According to the present invention the modifier metal comprises an intermediate layer that is combined with the core support and then a top layer consisting of a single metal, or compound thereof, from the platinum group metal is added. The single platinum-group metal is present in the catalyst in a concentration of from 0.05 to 2 mass-% and preferably 0.1 to 1 mass-% on an elemental basis. The ratio of modifier metal to top metal on the catalyst preferably is at least 3, and especially 5 or more, on an atomic basis.

It is critical to the invention that the modifier metal component consists essentially of components of one single metal from the designated group, i.e., that other metals within the group are not present in concentrations that significantly affect catalytic activity. Preferable maximum concentrations of contaminating metals other than the designated catalyst constituent are 0.01 mass-% or less on an elemental basis. Concentrations of modifier metals other than the designated modifier catalyst constituent are as follows on an elemental basis as mass-% of the catalyst:

| Preferred: Element | Especially Preferred: Less Than About: | No More Than About: |
|---|---|---|
| Ti | 0.25 | 0.20 |
| V | 0.05 | 0.01 |
| Cr | 0.05 | 0.01 |
| Mn | 0.05 | 0.01 |
| Fe | 0.07 | 0.01 |
| Co | 0.05 | 0.01 |
| Ni | 0.05 | 0.01 |
| Cu | 0.05 | 0.01 |
| Zn | 0.05 | 0.01 |

The modifier metal having an atomic number between 23 and 28 inclusive may be present in the catalyst as an elemental metal, as a chemical compound such as the oxide, sulfide, halide, oxychloride, etc., or as a physical or chemical combination with the porous carrier material and/or other components of the catalytic composite. Preferably a substantial portion of the modifier metal exists in the finished catalyst in an oxidation state above that of the elemental metal and most preferably at least partly as a sulfate.

The modifier metal may be incorporated in the ASTHE intermediate layer of the catalyst in any suitable manner such as by precipitation on the core porous carrier material, ion-exchange with the core carrier material or impregnation of the core carrier material at any stage in the preparation. One method of incorporating the modifier metal component into the catalyst composite involves the utilization of a soluble, decomposable compound of a first metal to impregnate and disperse the metal on the surface of the porous core carrier material. Thus, the first metal component is preferably added to the core carrier material by commingling the latter with an aqueous solution of a suitable metal salt or soluble compound of the metal. The utilization of second-metal nitrate compounds, such as Mn(IV) nitrate, Fe(III) nitrate or Ni(II) nitrate is particularly preferred.

The platinum-group metal component of the top layer consists essentially of one of platinum, palladium, ruthenium, rhodium, iridium, or osmium, with platinum being preferred. The first metal may exist within the final catalytic composite as a compound such as an oxide, sulfide, halide, oxyhalide, etc., in chemical combination with one or more of the other ingredients of the composite or as an elemental metal. Best results are obtained when substantially all of the first metal is present in the elemental state and it is homogeneously dispersed as the top layer or the carrier material.

The top metal component may be incorporated into the intermediate composite precursor of the catalyst in any suitable manner, such as by coprecipitation, ion-exchange or impregnation. The preferred method of incorporation involves the utilization of a soluble, decomposable compound of platinum-group metal to impregnate the core carrier material containing the modifier metal in a relatively uniform manner. For example, the top component may be added to the core support by commingling the latter with an aqueous solution of chloroplatinic acid or tetraamine platinum chloride. Other water-soluble compounds or complexes of platinum-group metals may be employed in impregnating solutions and include ammonium chloroplatinate, bromoplatinic acid, platinum trichloride, platinum tetrachloride hydrate, platinum dichlorocarbonyl dichloride, dinitrodiaminoplatinum, sodium tetranitroplatinate (II), palladium chloride, palladium nitrate, and the like. It generally is preferred to impregnate the core carrier material containing the modifier metal after it has been calcined in order to minimize the risk of washing away the valuable platinum-group metal.

The top platinum-group, metal component is dispersed homogeneously on the core support containing the modifier metal. Homogeneous dispersion of the platinum-group metal preferably is determined by Scanning Transmission Electron Microscope (STEM), comparing metals concentrations with overall catalyst metal content. In an alternative embodiment the top platinum-group metal component may be present as a surface-layer component of the core support as described in US-A-4,677,094, incorporated by reference. The "surface layer" is the layer of a catalyst particle adjacent to the surface of the particle, and the concentration of surface-layer metal tapers off in progressing from the surface to the center of the catalyst particle. Spray impregnation of the top metal component is preferably utilized, for example, using a spray nozzle within a rotating drum which holds the intermediate catalytic composite. A solution of the metal salt is ejected using air to form fine droplets of spray which contact the support in the rotating drum for effective mixing. The volume ratio of solution support is sufficient to effect the desired level of metal in the catalyst, preferably from 0.3 to 1.0.

Preferably the catalytic composition comprises a binder in order to provide catalyst particles in a convenient form according to the present invention. The binder usually comprises from 2 to 25 mass-%;, preferably from 5 to 20 mass-%, of the finished catalyst. The art teaches that any refractory inorganic oxide binder is suitable. One or more of silica, alumina or magnesia are preferred binder materials of the present invention. The particularly preferred binder material is alumina, with eta- and/or especially gamma-alumina being favored. Suitable gamma-alumina is sufficiently pure to enable the levels of contaminants in the catalyst described herein to be attained. A particularly high-purity alumina is "Ziegler alumina," described in US-A-2,892,858 and available from one or more of the Vista Chemical Company under the trademark "Catapal," from Condea Chemie GmbH under the trademark "Pural" and from ALCOA under the trademark "HiQ-20." This high-purity pseudoboehmite, after calcination at a high temperature, has been shown to yield a gamma-alumina of extremely high purity.

The hydroxide and binder may be composited to form core particle shapes known to those skilled in the art such as spheres, extrudates, rods, pills, pellets, tablets or granules. A preferred form of carrier material is a cylindrical extrudate, suitably prepared by mixing the alumina powder and catalyst carrier with water and suitable peptizing agents such as HCl until an extrudable dough is formed. The amount of water added to form the dough is typically sufficient to give a loss on ignition (LOI) at 500°C of 25 to 65 mass-%. The resulting dough is extruded through a suitably sized die to form extrudate particles. These particles are then dried at a temperature of 260° to 550°C for a period of 0.1 to 5 hours to form the extrudate particles. The preferred diameter of cylindrical extrudate particles is between 0.7 and 3.5 mm, with a length-to-diameter ratio of between 1:1 and 5:1.

Alternative spherical core particles may be formed directly by the oil-drop method as disclosed hereinbelow or from extrudates by rolling extrudate particles on a spinning disk. Manufacture of spheres by the well known continuous oil-drop method comprises: forming an alumina hydrosol by any of the techniques taught in the art and preferably by reacting aluminum metal with hydrochloric acid; combining the resulting hydrosol with the catalyst carrier and a suitable gelling agent; and dropping the resultant mixture into an oil bath maintained at elevated temperatures. The droplets of the mixture remain in the oil bath until they set and form hydrogel spheres. The spheres are then continuously withdrawn from the oil bath and typically subjected to specific aging and drying treatments in oil and an ammoniacal solution to further improve their physical characteristics. The resulting aged and gelled particles are then washed and dried at a relatively low temperature of 150° to 205°C and subjected to a calcination procedure at a temperature of 450° to 700°C for a period of 1 to 20 hours. This treatment effects conversion of the alumina hydrogel to the corresponding crystalline gamma-alumina. US-A-2,620,314 provides for additional details.

The core support of the invention may incorporate other porous, adsorptive, high-surface-area materials. Within the scope of the present invention are refractory core supports containing one or more of: (1) refractory inorganic oxides such as alumina, silica, titania, magnesia, zirconia, chromia, thoria, boria or mixtures thereof, (2) synthetically prepared or naturally occurring clays and silicates, which may be acid-treated; (3) crystalline zeolitic aluminosilicates, either naturally occurring or synthetically prepared such as FAU, MEL, MFI, MOR, MTW (IUPAC Commission on Zeolite Nomenclature), in hydrogen form or in a form which has been exchanged with metal cations; (4) spinels such as MgAl₂O₄, FeAl₂O₄, ZnAl₂O₄; and (5) combinations of materials from one or more of these groups.

Naphtha feedstock to the present process comprises paraffins, naphthenes, and aromatics, and may comprise small amounts of olefins, boiling within the gasoline range. Feedstocks which may be utilized include straight-run naphthas, natural gasoline, synthetic naphthas, thermal gasoline, catalytically cracked gasoline, partially reformed naphthas or raffinates from extraction of aromatics. The feedstock essentially is encompassed by the range of a full-range naphtha, or within the range of 0° to 230°C. Usually the feedstock is light naphtha having an initial boiling point of 10° to 65°C and a final boiling point from 75° to 110°C; preferably, the final boiling point is less than 95°C.

The naphtha feedstock generally contains small amounts of sulfur compounds amounting to less than 10 mass parts per million (ppm) on an elemental basis. Preferably the naphtha feedstock has been prepared from a contaminated feedstock by a conventional pretreating step such as hydrotreating, hydrorefining or hydrodesulfurization to convert such contaminants as sulfurous, nitrogenous and oxygenated compounds to H₂S, NH₃ and H₂O, respectively, which can be separated from hydrocarbons by fractionation. Water can act to attenuate catalyst acidity by acting as a base, and sulfur temporarily deactivates the catalyst by platinum poisoning. Feedstock hydrotreating as described hereinabove usually reduces water-generating oxygenates and deactivating sulfur compounds to suitable levels, and other means such as adsorption systems for the removal of sulfur and water from hydrocarbon streams generally are not required. It is within the ambit of the present invention that this optional pretreating step be included in the present process combination.

The principal components of the preferred feedstock are alkanes and cycloalkanes having from 4 to 7 carbon atoms per molecule (C₄ to C₇), especially C₅ to C₆, and smaller amounts of aromatic and olefinic hydrocarbons also may be present. Usually, the concentration of C₇ and heavier components is less than 20 mass % of the feedstock. Although there are no specific limits to the total content in the feedstock of cyclic hydrocarbons, the feedstock generally contains between 2 and 40 mass % of cyclics comprising naphthenes and aromatics. The aromatics contained in the naphtha feedstock, although generally amounting to less than the alkanes and cycloalkanes, may comprise from 2 to 20 mass % and more usually 5 to 10 mass % of the total. Benzene usually comprises the principal aromatics constituent of the preferred feedstock, optionally along with smaller amounts of toluene and higher-boiling aromatics within the boiling ranges described above.

Contacting within the isomerization zones may be effected using the catalyst in a fixed-bed system, a moving-bed system, a fluidized-bed system, or in a batch-type operation. A fixed-bed system is preferred. The reactants may be contacted with the bed of catalyst particles in either upward, downward, or radial-flow fashion. The reactants may be in the liquid phase, a mixed liquid-vapor phase, or a vapor phase when contacted with the catalyst particles, with excellent results being obtained by application of the present invention to a primarily liquid-phase operation. The isomerization zone may be in a single reactor or in two or more separate reactors with suitable means therebetween to insure that the desired isomerization temperature is maintained at the entrance to each zone. Two or more reactors in sequence are preferred to enable improved isomerization through control of individual reactor temperatures and for partial catalyst replacement without a process shutdown.

Isomerization conditions in the isomerization zone include reactor temperatures usually ranging from 40° to 250°C. Lower reaction temperatures are generally preferred in order to favor equilibrium mixtures having the highest concentration of high-octane highly branched isoalkanes and to minimize cracking of the feed to lighter hydrocarbons. Temperatures in the range of from 100° to 200°C are preferred in the present invention. Reactor operating pressures generally range from 100 kPa to 10 MPa absolute, preferably between 0.5 and 4 MPa. Liquid hourly space velocities range from 0.2 to 25 volumes of isomerizable hydrocarbon feed per hour per volume of catalyst, with a range of 0.5 to 15 hr⁻¹ being preferred.

Hydrogen is admixed with or remains with the paraffinic intermediate to the isomerization zone to provide a mole ratio of hydrogen to hydrocarbon feed of from 0.01 to 20, preferably from 0.05 to 5. The hydrogen may be supplied totally from outside the process or supplemented by hydrogen recycled to the feed after separation from reactor effluent. Light hydrocarbons and small amounts of inerts such as nitrogen and argon may be present in the hydrogen. Water should be removed from hydrogen supplied from outside the process, preferably by an adsorption system as is known in the art. In a preferred embodiment the hydrogen to hydrocarbon mol ratio in the reactor effluent is equal to or less than 0.05, generally obviating the need to recycle hydrogen from the reactor effluent to the feed.

The isomerization zone generally comprises a separation section, optimally comprising one or more fractional distillation columns having associated appurtenances and separating lighter components from an isoparaffin-rich product. In addition, as discussed hereinabove in connection with the Figure, a fractionator may separate an isoparaffin concentrate from a cyclics concentrate with the latter being recycled to the ring-cleavage zone.

Preferably part or all of the isoparaffin-rich product and/or the isoparaffin concentrate are blended into finished gasoline along with other gasoline components from refinery processing including but not limited to one or more of butanes, butenes, pentanes, naphtha, catalytic reformate, isomerate, alkylate, polymer, aromatic extract, heavy aromatics; gasoline from catalytic cracking, hydrocracking, thermal cracking, thermal reforming, steam pyrolysis and coking; oxygenates such as methanol, ethanol, propanol, isopropanol, TBA, SBA, MTBE, ETBE, MTAE and higher alcohols and ethers; and small amounts of additives to promote gasoline stability and uniformity, avoid corrosion and weather problems, maintain a clean engine and improve driveability.

### EXAMPLES

The following examples serve to illustrate certain specific embodiments of the present invention.

### Control Example I

A control catalyst based upon known art was prepared in order to illustrate the benefits of using the catalyst of the invention. About 100 grams of Zr(OH)₄ prepared by neutralizing Zr(NO₃)₂ with ammonia was spray-impregnated with a combined solution of Fe(NO₃)₃ and Mn(NO₃)₄ in a quantity sufficient to achieve the catalyst metals levels shown below and dried at 140°C for a period of 60 hours. The metals-containing catalytic composite then was spray-impregnated with a solution of (NH₄)₂SO₄, dried at 120°C for 18 hours, raised over a period of 2 hours to 300°C and held for 2 hours, then calcined at 650°C for 3 hours. The sulfated composite then was spray-impregnated with a solution of chloroplatinic acid (CPA), dried at 120°C for 10 hours, raised over a period of 2 hours to 300°C and held for 2 hours, then calcined at 600°C for 2 hours. The finished control catalyst was designated Catalyst X and had the following composition in mass-%:

| | |
|---|---|
| Iron | 1.40 |
| Manganese | 0.55 |
| Platinum | 0.23 |
| Sulfur | 1.73 |

### Control Example II

A second control catalyst based upon known art was prepared. About 100 grams of Zr(OH)₄ prepared as in Control Example I was spray-impregnated with a solution of (NH₄)₂SO₄, dried at 120°C for 10 hours, raised over a period of 2 hours to 300°C and held for 2 hours, then calcined at 650°C for 3 hours. The sulfated composite then was spray-impregnated with a solution of chloroplatinic acid (CPA), dried at 120°C for 10 hours, raised over a period of 2 hours to 300°C and held for 2 hours, then calcined at 600°C for 2 hours. The finished control catalyst was designated Catalyst Y and had the following composition in mass-%:

| | |
|---|---|
| Platinum | 0.22 |
| Sulfur | 1.8 est. |

### Example I

A catalyst of the invention was prepared in order to compare its performance with that of the control Catalyst X and Y. About 100 grams of Zr(OH)₄ prepared as in Control Example I was spray-impregnated with a solution of a modifier metal, Mn(NO₃)₄, in a quantity sufficient to achieve the catalyst manganese levels shown below and dried at 120°C for a period of 10 hours. The modifier metal-containing catalytic composite then was spray-impregnated with a solution of (NH₄)₂SO₄, dried at 120°C for 5 hours, raised over a period of 2 hours to 300°C and held for 2 hours, then calcined at 650°C for 3 hours. The sulfated intermediate composite then was spray-impregnated with a solution of chloroplatinic acid (CPA), dried at 120°C for 65 hours, raised over a period of 2 hours to 300°C and held for 2 hours, then calcined at 600°C for 2 hours. The finished catalyst of the invention was designated Catalyst A and had the following composition in mass-%:

| | |
|---|---|
| Manganese | 0.47 |
| Platinum | 0.24 |
| Sulfur | 1.8 est. |

### Example II

A catalyst of the invention was prepared in order to compare its performance with that of the control Catalyst X. About 100 grams of Zr(OH)₄ prepared as in Control Example I was spray-impregnated with a solution of a modifier metal, Fe(NO₃), in a quantity sufficient to achieve the catalyst iron levels shown below and dried at 120°C for a period of 10 hours. The modifier metal-containing catalytic composite then was spray-impregnated with a solution of (NH₄)₂SO₄, dried at 120°C for 10 hours, raised over a period of 2 hours to 300°C and held for 2 hours, then calcined at 650°C for 3 hours. The sulfated intermediate composite then was spray-impregnated with a solution of chloroplatinic acid (CPA), dried at 120°C for 10 hours, raised over a period of 2 hours to 300°C and held for 2 hours, then calcined at 600°C for 2 hours. The finished catalyst of the invention was designated Catalyst B and had the following composition in mass-%:

| | |
|---|---|
| Iron | 1.49 |
| Platinum | 0.24 |
| Sulfur | 1.8 est. |

### Example III

A catalyst of the invention were prepared in the manner of Examples I and II but containing nickel instead of manganese or iron. This catalysts was designated Catalysts C and had the following composition:

| Catalyst: | C |
|---|---|
| Nickel | 1.57 |
| Platinum | 0.25 |
| Sulfur | 1.93 |

### Example IV

Performance tests were carried out to compare the catalysts of the invention with the Control Catalysts X and Y when isomerizing light hydrocarbons to increase the content of isoparaffins and resulting octane number as a gasoline blending component. The feedstock to the isomerization tests corresponded to a light straight-run naphtha and had the following composition in mass-%:

| | |
|---|---|
| C₅ paraffins | 43 |
| C₆ paraffins | 47 |
| Methylcyclopentane | 5 |
| Cyclohexane | 3 |
| C₇ paraffins | 2 |

The isomerization tests were carried out at a pressure of about 3.2 kPa, mass hourly space velocity of 1.8, hydrogen/hydrocarbon mole ratio of 0.14 and programmed variable temperature between 116 and 150°C.The results of the isomerization tests, comparing Catalysts A and B of the invention with Control Catalyst X and Y, are shown in the Figure. Temperature was programmed during the runs to show comparable performance at operating temperatures of 116° and 150°C. The catalysts of the invention demonstrate significantly higher isomerization activity than the control catalysts in terms of the isopentane and 2,2-dimethylpentane content of the product.

Comparing the content of 2,2-dimethylbutane in hexanes at comparable conditions comprising an operating temperature of 116°C, results were as follows:

| Catalyst | 2,2-DMB/Hexanes |
|---|---|
| A | 27 |
| B | 28 |
| C | 25 |
| X | 22 |
| Y | 11 |

## Claims

1. A layered catalyst suitable for the isomerization of paraffinic hydrocarbons comprising a combination of:
(a) a core sulfated support comprising at least one of the oxides and hydroxides of elements of Group IVB (IUPAC 4) of the Periodic Table;
(b) an intermediate layer consisting essentially of a modifier component of from 0.05 to 2 mass-%, on an elemental basis, of only one single metal, or compound thereof, selected from the group consisting of manganese, nickel and iron inclusive; and
(c) a top layer comprising from 0.05 to 10 mass-%, on an elemental basis, of a single metal, or compound thereof, selected from the group consisting of the platinum-group metals.

2. The layered catalyst of Claim 1 wherein the element of Group IVB (IUPAC 4) comprises zirconium.

3. The layered catalyst of Claim 1 comprising from 0.5 to 5 mass-% sulfur on an elemental basis.

4. The layered catalyst of Claim 1 wherein the atomic ratio of intermediate metal to top metal is at least 3.

5. The layered catalyst of Claim 1 wherein the core sulfated support further comprises from 2 to 25 mass-% of a refractory inorganic-oxide binder.

6. The layered catalyst of Claim 1 wherein the platinum-group metal consists essentially of platinum.

7. The layered catalyst of Claim 1 wherein the intermediate layer consists essentially of manganese or a compound thereof and the top layer is platinum, or a compound thereof.

8. The layered catalyst of Claim 1 wherein the intermediate layer consists essentially of nickel or a compound thereof and the top layer is platinum, or a compound thereof.

9. A process for the isomerization of a naphtha feedstock to obtain a product having an increased isoparaffin content comprising contacting the feedstock in an isomerization zone maintained at isomerization conditions comprising a temperature of from 40 to 250°C, pressure of from 100 kPa to 10 MPa and liquid hourly space velocity of from 0.2 to 25 hr⁻¹ with the layered isomerization catalyst defined in any one of Claims 1 to 8.

10. The isomerization process of Claim 11 wherein free hydrogen is present in the isomerization zone in an amount of from 0.01 to 20 moles per mole of C₅+ hydrocarbons present in the zone.

11. The isomerization process of Claim 9 wherein the isomerization conditions comprise a temperature of from 100 to 200°C, pressure of from 300 kPa to 4 MPa, and liquid hourly space velocity of from 0.5 to 15 hr⁻¹, and wherein free hydrogen is present in the isomerization zone in an amount of from 0.05 to 5 moles per mole of C₅+ hydrocarbons present in the zone.
